# EUROPEAN PATENT SPECIFICATION

(11) **EP 2 674 800 B1**
(45) Date of publication and mention of the grant of the patent: **31.10.2018**
(21) Application number: 13171259.8
(22) Date of filing: 10.06.2013
(51) Int. Cl.: G02B 6/44

(54) **Access Terminal Box**
Zugangsendgerätskasten
Boîtier de terminal d'accès

(30) Priority: 15.06.2012 CN 201210199402
(43) Date of publication of application: 18.12.2013
(73) Proprietor: Huawei Technologies Co., Ltd., Longgang District Shenzhen, Guangdong 518129 (CN)
(72) Inventor: Shi, Deyi, Shenzhen Guangdong 518129 (CN); Zhou, Peng, Shenzhen Guangdong 518129 (CN)
(74) Representative: Körber, Martin Hans

(56) References cited:
- EP-A1- 2 463 696
- EP-A2- 0 178 179
- WO-A1-2005/088373
- WO-A1-2006/102501
- WO-A1-2008/033997
- WO-A1-2011/057666
- WO-A2-92/22842

## Description

### TECHNICAL FIELD

The present invention relates to the field of communications technologies, and in particular, to an access terminal box.

### BACKGROUND

Fiber communication, because of its large capacity, long distance, anti-electromagnetic interference and other advantages, satisfies people's requirements for large-amount information and high precision in future. In addition, the low price enables such a transmission medium as optical fibers to be widely promoted, and currently an optical network is gradually used in families.

Installation of Fiber To The Home usually includes installation of an access terminal box (ATB, Access Terminal Box) and installation of an optical network terminal (ONT, Optical Network Terminal). Both the access terminal box and the optical network terminal belong to indoor application products in optical networks, and the access terminal box is connected to the optical network terminal by using a lead-out cable of the access terminal box. As Fiber To The Home is required to be installed at the user's home, a simplified installation method should be used for Fiber To The Home popularization.

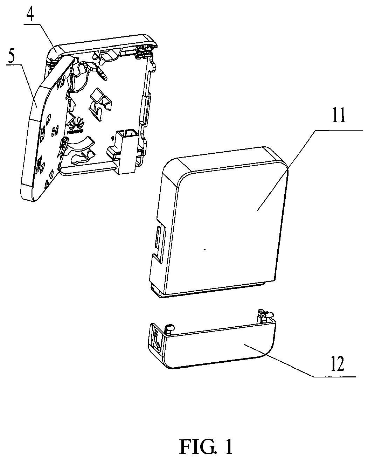

FIG. 1 shows an access terminal box in the prior art, including a base 4, a splice tray 5, a roof cover 11 and a roof cover 12. The access terminal box itself includes the base 4, the roof cover 11 and the roof cover 12, constituting a closed box body, and the access terminal box, as a separate member, is wall-mounted side by side with the optical network terminal, and is connected with the optical network terminal by using the lead-out cable of the access terminal box. As the access terminal box and the optical network terminal in the prior art are separated packaging boxes, during indoor installation, a user sets wall-mounted holes respectively for the access terminal box and the optical network terminal, and the access terminal box and the optical network terminal are respectively wall-mounted, thereby causing problems of complicated installation, time and energy consuming, and poor user experience.

WO 92/22842 A2 discloses an optical fibre connection terminal for the use in an office or domestic environment providing a two-part base unit, an organizer unit and a two-part top unit. An optical fibre cable is brought to the base unit where it is at the beginning secured against tensile forces. These three main units are designed to provide a well protected route for the fibres from the cable to an easily accessible connection point for customer use in the top unit, especially in a transparent sliding cover.

WO 2005/088373 A1 discloses a cable and fibre access terminal for mounting to the end of a fibre distribution cable and configured to be extended through a buried conduit. The fibre distribution cable may include a plurality of optical fibres and enters a housing of the terminal through a base. The terminal also includes a plurality of fibre optic connectors or adapters extending through the housing. The terminal includes a cover and the housing defining an interior and the interior includes a cable slack storage arrangement providing bend radius protection for the optical fibre cables within the interior.

### SUMMARY

An embodiment of the present invention provides an access terminal box, to solve technical problems of complicated installation, time and energy consuming, and poor user experience for Fiber To The Home installation in the prior art.

To achieve the above purpose, the embodiment of the present invention adopts the following technical solutions:
An access terminal box includes a base, the base including a bottom surface and sidewalls set around the bottom surface, the bottom surface and the sidewalls constituting an opening-box-type structure; the base is matched and connected with a roof cover, the roof cover being a bottom case of an optical network terminal; and the base of the access terminal box is fixed to the bottom case of the optical network terminal by using a fixing device. The inventive access terminal box is characterized in that the bottom surface of the access terminal box is set with a coiling apparatus for a lead-in fiber and a coiling apparatus for a lead-out fiber, and a pre-connected connector at the end of the lead-out fiber is connected over a pigtail outlet set at a position on the bottom sidewall of the base in form of a pigtail led out from the pigtail outlet to the optical network terminal.

### BRIEF DESCRIPTION OF DRAWINGS

FIG. 1 is a schematic structural diagram of an access terminal box in the prior art;
FIG. 2 is a three-dimensional schematic structural diagram of an access terminal box set in an embodiment of the present invention;
FIG. 3 is a top view of an access terminal box set in an embodiment of the present invention;
FIG. 4 is a sectional view along an A-A direction of FIG. 4;
FIG. 5 is a sectional view along a B-B direction of FIG. 4;
FIG. 6 is a three-dimensional schematic structural diagram of a base shown in FIG. 3;
FIG. 7 is a top view of a base shown in FIG. 7;
FIG. 8 is a sectional view along an A-A direction of FIG. 8;
FIG. 9 is a sectional view along a B-B direction of FIG. 8;
FIG. 10 is a cable routing diagram of an access terminal box set in an embodiment of the present invention;
FIG. 11 is another cable routing diagram of an access terminal box set in an embodiment of the present invention; and
FIG. 12 is an external schematic diagram for an assembled structure of an access terminal box and an optical network terminal set in an embodiment of the present invention.

### DESCRIPTION OF EMBODIMENTS

The following describes an access terminal box set in an embodiment of the present invention in detail with reference to the accompanying drawings.

It should be definite that, the described embodiments are merely a part rather than all of the embodiments of the present invention. All other embodiments obtained by persons of ordinary skill in the art based on the embodiments of the present invention without creative efforts shall fall within the protection scope of the present invention.

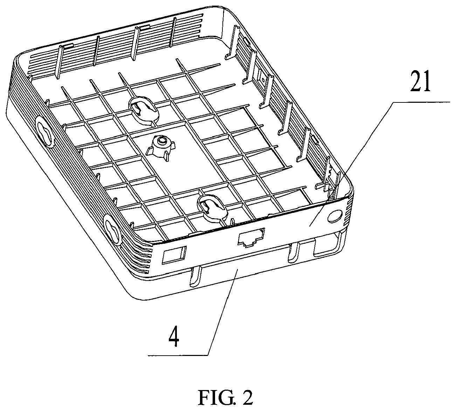

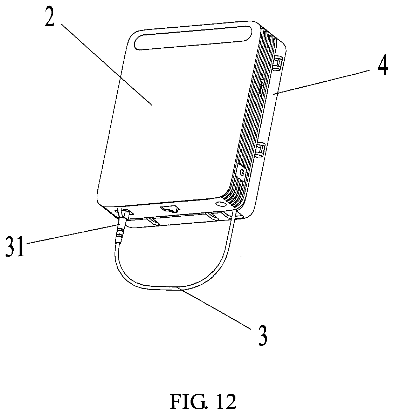

An access terminal box of an embodiment of the present invention is shown in FIG. 2 and FIG. 12. The access terminal box includes a base 4, the base 4 including a bottom surface and sidewalls set around the bottom surface, and the bottom surface and the sidewalls constituting an opening-box-type structure. The base 4 is matched and connected with a roof cover, the roof cover being a bottom case 21 of an optical network terminal 2. The base 4 of the access terminal box is fixed to the bottom case 21 of the optical network terminal 2 by using a fixing device, where the bottom surface of the access terminal box is set with a coiling apparatus for a lead-in fiber and a coiling apparatus for a lead-out fiber 3, and a connector 31 of the lead-out fiber 3 is connected to the optical network terminal 2.

The access terminal box set in the embodiment of the present invention is simplified into a base including a bottom surface and sidewalls set around the bottom surface, where the bottom

An access terminal box of an embodiment of the present invention is shown in FIG. 2 and FIG. 12. The access terminal box includes a base 4, the base 4 including a bottom surface and sidewalls set around the bottom surface, and the bottom surface and the sidewalls constituting an opening-box-type structure. The base 4 is matched and connected with a roof cover, the roof cover being a bottom case 21 of an optical network terminal 2. The base 4 of the access terminal box is fixed to the bottom case 21 of the optical network terminal 2 by using a fixing device, where the bottom surface of the access terminal box is set with a coiling apparatus for a lead-in fiber and a coiling apparatus for a lead-out fiber 3, and a connector 31 of the lead-out fiber 3 is connected to the optical network terminal 2.

The access terminal box set in the embodiment of the present invention is simplified into a base including a bottom surface and sidewalls set around the bottom surface, where the bottom surface and the sidewalls constitute an opening-box-type structure, and the bottom surface of the access terminal box is set with a coiling apparatus for a lead-in fiber and a coiling apparatus for a lead-out fiber. Meanwhile, the access terminal box is connected with the optical network terminal by using a fixing device to form a packaging box, and a connector of the lead-out fiber is connected to the optical network terminal. In this way, by setting wall-mounted holes for the access terminal box and mounting the access terminal box in a wall-mounted manner, the optical network terminal surface and the sidewalls constitute an opening-box-type structure, and the bottom surface of the access terminal box is set with a coiling apparatus for a lead-in fiber and a coiling apparatus for a lead-out fiber. Meanwhile, the access terminal box is connected with the optical network terminal by using a fixing device to form a packaging box, and a connector of the lead-out fiber is connected to the optical network terminal. In this way, by setting wall-mounted holes for the access terminal box and mounting the access terminal box in a wall-mounted manner, the optical network terminal is wall-mounted, thereby saving installation time, simplifying installation steps and improving user satisfaction.

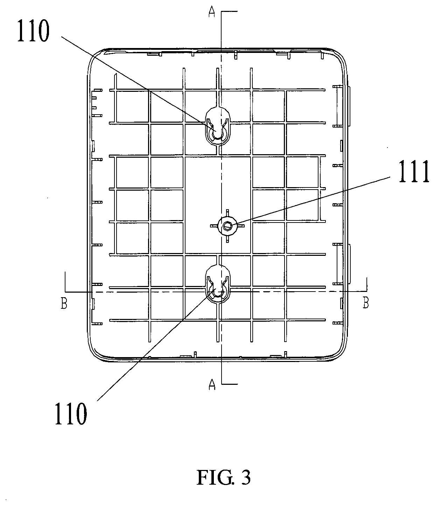

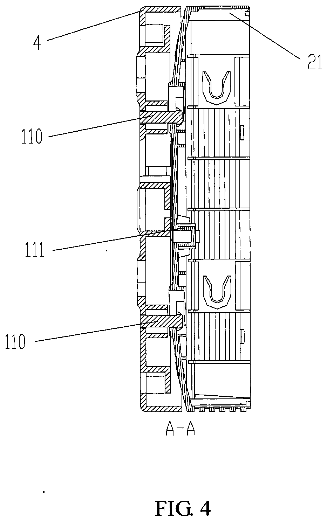

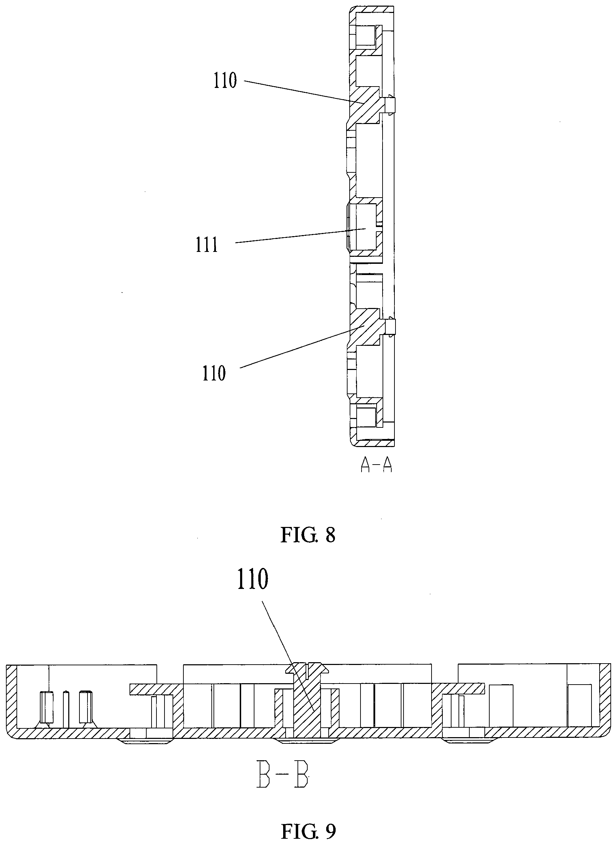

The following specifically explains the embodiment of the present invention with reference to FIG. 3 to FIG. 11:
As shown in FIG. 3 to FIG. 5, in the embodiment of the present invention, a bottom case 21 of the optical network terminal is a roof cover of the base 4, and the bottom case 21 is fixed on the base 4 by using a fixing device. The fixing device may be a buckle. In this case, a buckle 110 is set on the base 4, and a buckle groove matching with the buckle 110 is set on the bottom case 21, so that the base 4 is matched and connected with the bottom case 21 through clamping between the buckle 110 and the buckle groove. The present invention is not limited to this embodiment, and further, the buckle may be set on the bottom case 21, and the buckle groove matching with the buckle is set on the base 4. In addition, the fixing device further may be a bolt, so that a base connection hole is set on the base 4, and a bottom case connection hole aligned with the base connection hole is set on the bottom case 21, the aligned base connection hole and the bottom case connection hole are set with a bolt 111, so that the base 4 is matched and connected with the bottom case 21 by using the bolt 111. In this way, on the basis of clamping the base 4 with the bottom case 21, the base 4 is connected to the bottom case 21 by using the bolt 111, and therefore the base 4 is more tightly and reliably matched and connected with the bottom case 21. Assuredly, in other embodiments of the present invention, the base 4 may be clamped with the bottom case 21 only by matching the buckle 110 with the buckle groove, the base 4 may further be clamped with the bottom case 21 only by using the bolt 111. Alternatively, the fixing device may also be a screw, and the base 4 may further be matched and connected with the bottom case 21 through welding, bonding and other connection methods.

Because the base 4 has an opening-box-type structure, a cable inlet and a cable outlet can be set on the sidewalls, and other structures of the access terminal box are set on the bottom surface (Detailed description is given below).

It should be noted that a concept of the fiber mentioned in the embodiment of the present invention is the same as that of the cable.

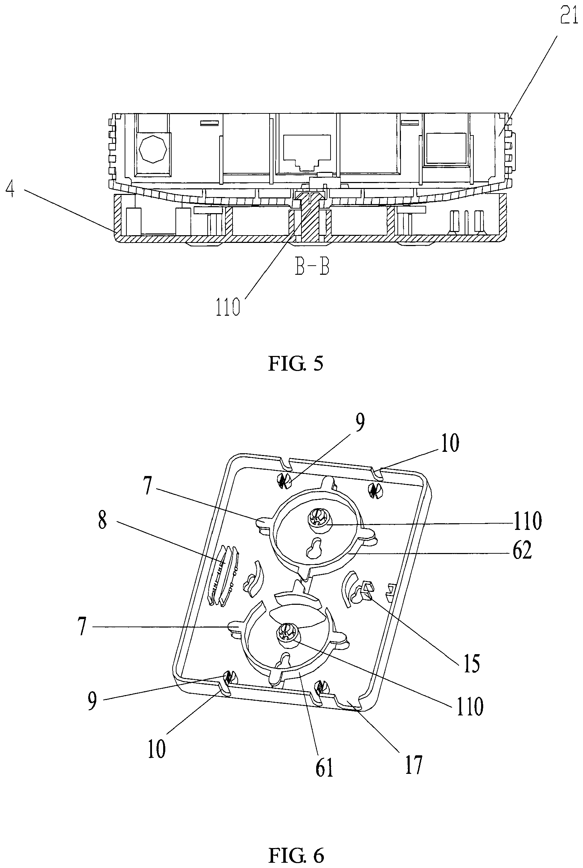

As shown in FIG. 6, a coiling apparatus 61 for a lead-in fiber and a coiling apparatus 62 for a lead-out fiber are set on the bottom surface, for example, at a substantially central position of the bottom surface. The coiling apparatus 61 for the lead-in fiber is configured to coil and arrange the lead-in fiber, and the coiling apparatus 62 for the lead-out fiber is configured to coil and arrange the lead-out fiber, which can effectively protect the reserved cable, where the coiling apparatus 61 for the lead-in fiber and the coiling apparatus 62 for the lead-out fiber may be set at the central position of the bottom surface, so that the region for fiber coiling is larger, and it is convenient for fiber coiling.

Further it can be seen from FIG. 6 that, the coiling apparatus 61 for the lead-in fiber and the coiling apparatus 62 for the lead-out fiber are constituted by two separated circular hollow cylinders, outer edges of each hollow cylinder are set with a plurality of evenly distributed cable-controlling pawls 7. The fiber coiling apparatus of this structure has a large space and can effectively protect the reserved fiber, and reduce difficulties in construction and operation. In addition, the cable-controlling pawls can enable fiber coiling to be even and prevent cable from scattering.

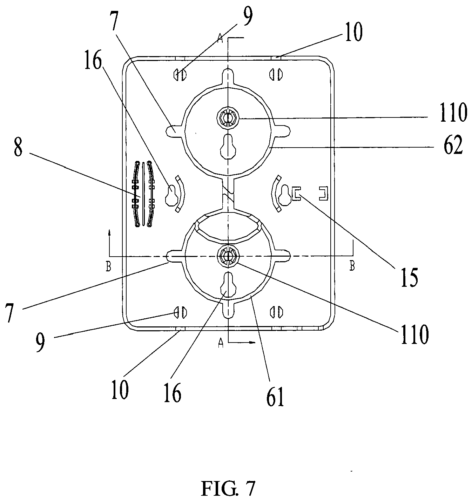

In addition, it can be known from FIG. 6 and FIG. 7 that, a fiber fusion splicing region 8 is set at an edge of one side of the bottom surface (that is, the left side shown in FIG. 7), and a buckle groove 15 is set at an edge of the opposite side (that is, the right side shown in FIG. 7). The fiber fusion splicing region is configured to fix the fiber junction apparatus, such as a protective casing or a mechanical splicer. The fiber fusion splicing region is an arc-shaped groove formed by two vertical plates disposed opposite to each other, disposition for this region can enable fiber junction of the access terminal box to be done in manners of hot melting and mechanical splicing. The arc-shaped structure can simply and reliably fix the hot-melting and mechanical-splicing fiber connectors and protective casings. The buckle groove is configured to install a fiber adapter, which is required to convert the model of the cable connector of the pigtail to that matching with the optical network terminal when the cable connector of the pigtail does not match with the cable interface of the optical network terminal. The fiber adapter may be an SC (Standard Connector) adapter or an FC (Fiber Connector) adapter, and the buckle groove may further be set at the bottom position on the right of the bottom surface of the base.

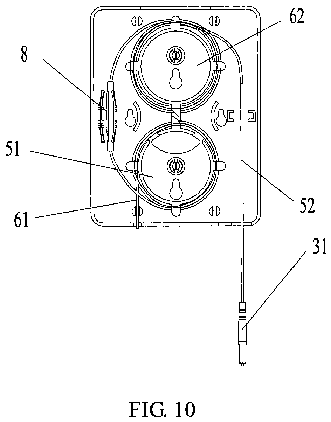

Further, referring to FIG. 10, the access terminal box supports fusion splicing fibers, and the routing is as follows: one end of the lead-in fiber 51, after being coiled on the coiling apparatus 61 for the lead-in fiber, enters into the fiber fusion splicing region 8 for fusion splicing with one end of the lead-out fiber 52 of the coiling apparatus 62 for the lead-out fiber, the lead-out fiber after fusion splicing, after being coiled on the coiling apparatus 62 for the lead-out fiber, connects one end of the lead-out fiber, set with a connector 31, with the optical network terminal. In this embodiment, the lead-in fiber 51 and the lead-out fiber 52 are two fibers.

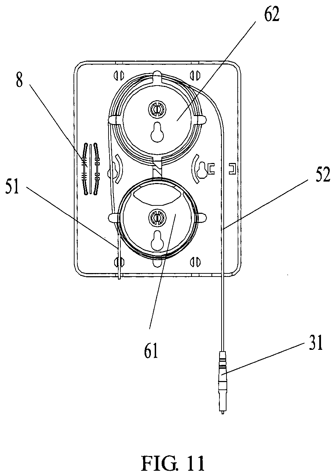

In addition, referring to FIG. 11, the access terminal box supports prefabricated fibers, and the routing is as follows: the lead-in fiber is prefabricated in the factory, one end of the lead-in fiber 51 after prefabrication, after being coiled on the coiling apparatus 61 for the lead-in fiber and being coiled on the coiling apparatus 62 for the lead-out fiber, outputs the lead-out fiber 52, and is connected with the optical network terminal 2 by using the pre-connected connector 31 of the lead-out fiber. In this embodiment, the lead-in fiber 51 and the lead-out fiber 52 are a prefabricated overall fiber. As shown in FIG. 7, the bottom surface is further set with a wall-mounted hole 16. The wall-mounted hole 16 is set for wall mounting of the access terminal box, and four wall-mounted holes can be evenly set at the upper, lower, left and right positions of the central position of the bottom surface for the stability of the installation.

A cable inlet and a cable outlet 10 are set both on a top sidewall and a bottom sidewall of the base. In this way, indoor cables can get in and get out in a plurality of directions of the access terminal box.

A cable groove 9 is set on a position of the bottom surface opposite to each cable inlet and cable outlet 10, a wall of the cable groove 9 may be set with a plurality of dentations. The cable groove is set to enable the cable to get in and get out along the direction of the cable groove, and the dentations play a role of fixing the cable when the cable gets in and gets out.

A pigtail outlet 17 is set at a position on the bottom sidewall of the base opposite to the buckle groove 15, the pigtail is led out from the pigtail outlet 17 to connect the optical network terminal.

The following further describes the structure and installation process of the access terminal box with reference to FIG. 3 to FIG. 11:

During the installation of the access terminal box, the cable is striped at the cable inlet and outlet 10 of the base 4, and then is fixed after being striped, as long as the cable is coiled by about a length of 0.5 meters in the coiling apparatus 61 for a lead-in fiber of the base 4;

The coiled cable is connected at the fiber fusion splicing region 8 by fusion splicing.

After completion of fusion splicing, the pigtail 3 is led out from the pigtail outlet 17, and connects the optical network terminal 2 by using a connector 31. Then the bottom case 21 of the optical network terminal 2 is fixed and connected with the base 4 by using the fixed device, and the roof cover of the optical network terminal 2 is connected with the bottom case 21, thereby forming the appearance shown in FIG. 12. Finally, it is wall-mounted by using the wall-installation hole 16, then for the installation of the access terminal box and the optical network terminal is completed.

The foregoing descriptions are merely specific embodiments of the present invention, but are not intended to limit the protection scope of the present invention. Any variation or replacements readily figured out by persons skilled in the art within the technical scope disclosed in the present invention shall fall within the protection scope of the present invention. Therefore, the protection scope of the present invention shall be subject to the protection scope of the claims.

## Claims

1. An access terminal box, comprising a base (4), wherein: the base (4) comprises a bottom surface and sidewalls set around the bottom surface, the bottom surface and the sidewalls constituting an opening-box-type structure; the base is matched and connected with a roof cover, the roof cover being a bottom case (21) of an optical network terminal (2); the base of the access terminal box is fixed to the bottom case (21) of the optical network terminal (2) by using a fixing device
**characterized in that**
the bottom surface of the access terminal box is set with a coiling apparatus (61) for a lead-in fiber (51) and a coiling apparatus (61) for a lead-out fiber (52), and a pre-connected connector (31) at the end of the lead-out fiber (52) is connected over a pigtail outlet (17) set at a position on the bottom sidewall of the base (4) in form of a pigtail (3) led out from the pigtail outlet (17) to the optical network terminal (2).

2. The access terminal box according to claim 1, wherein the fixing device is a buckle (110), a buckle groove (15) matching with the buckle (110) is set on the bottom case (21) of the optical network terminal (2), and the base (4) of the access terminal box is fixed to the bottom case (21) of the optical network terminal (2) by using the buckle (110); or
the fixing device is a bolt (111), the base (4) of the access terminal box is set with a base connection hole, the bottom case (21) of the optical network terminal (2) is set with a bottom case connection hole aligned with the base connection hole, and the aligned base connection hole and the bottom case connection hole are set with a bolt (111), and the base (4) of the access terminal box is fixed to the bottom case of the optical network terminal (2) by using the bolt (111).

3. The access terminal box according to claim 1 or 2, wherein the coiling apparatus (61) for the lead-in fiber (51) is equipped with lead-in fibers (51), and the coiling apparatus (62) for the lead-out fiber (52) is equipped with lead-out fibers (52).

4. The access terminal box according to claim 3, wherein the coiling apparatus (61) for the lead-in fiber (51) and the coiling apparatus (62) for the lead-out fiber (52) are constituted by two separated circular hollow cylinders, outer edges of each hollow cylinder are set with a plurality of evenly distributed cable-controlling pawls (7).

5. The access terminal box according to claim 1 or 2, wherein a fiber fusion splicing region is set at an edge of one side of the bottom surface, and a buckle groove is set at an edge of the opposite side.

6. The access terminal box according to one of the claims 1 to 4, wherein one end of the lead-in fiber (51), after being coiled on the coiling apparatus (61) for the lead-in fiber (51), enters into the fiber fusion splicing region (8) for fusion splicing with one end of the lead-out fiber (52) of the coiling apparatus (62) for the lead-out fiber (52), and the lead-out fiber (52) after fusion splicing, after being coiled on the coiling apparatus (62) for the lead-out fiber (52), connects the other end of the lead-out fiber (52), set with a connector (31), with the optical network terminal (2).

7. The access terminal box according to claim 1, wherein one end of the lead-in fiber (51), after being coiled on the coiling apparatus (61) for the lead-in fiber (51) and coiled on the coiling apparatus (62) for the lead-out fiber (52), outputs the lead-out fiber (52), and is connected with the optical network terminal (2) by using the pre-connection connector of the lead-out fiber (52).

8. The access terminal box according to claim 5 or 6, wherein a cable inlet and a cable outlet (10) are set both on a top sidewall and on a bottom sidewall of the base (4).

9. The access terminal box according to claim 7, wherein a cable groove (9) is set at a position on the bottom surface opposite to each cable inlet and outlet (10).

10. The access terminal box according to claim 5, wherein a pigtail outlet (17) is set at a position on the bottom sidewall of the base opposite to the buckle groove (15).

## Patentansprüche

1. Zugriffsanschlusskasten, umfassend eine Basis (4), wobei: die Basis (4) eine Bodenfläche und Seitenwände um die Bodenfläche herum arrangiert umfasst, wobei die Bodenfläche und die Seitenwände eine Konstruktion vom Typ offener Kasten darstellen; wobei der Basis eine Eindeckung entspricht und mit dieser verbunden ist, wobei die Eindeckung ein unteres Gehäuse (21) eines Endgeräts (2) eines optischen Netzwerks ist; wobei die Basis des Zugriffsanschlusskastens am unteren Gehäuse (21) des Endgeräts (2) eines optischen Netzwerks unter Verwendung einer Fixiervorrichtung fixiert ist
**dadurch gekennzeichnet, dass**
die Bodenfläche des Zugriffsanschlusskastens mit einer Wickelvorrichtung (61) für einen Eingangsleiter (51) und einer Wickelvorrichtung (61) für einen Ausgangsleiter (52) versehen ist und ein vormontierter Stecker (31) am Ende des Ausgangsleiters (52) über einen Anschlussleitungsauslass (17), der an einer Position an der unteren Seitenwand der Basis (4) in Form einer Anschlussleitung (3) vorgesehen ist, die aus dem Anschlussleitungsauslass (17) herausgeführt ist, mit dem Endgerät (2) eines optischen Netzwerks verbunden ist.

2. Zugriffsanschlusskasten nach Anspruch 1, wobei die Fixiervorrichtung ein Verschluss (110) ist, wobei eine dem Verschluss (110) entsprechende Verschlussrille (15) am unteren Gehäuse (21) des Endgeräts (2) eines optischen Netzwerks vorgesehen ist und wobei die Basis (4) des Zugriffsanschlusskastens unter Verwendung des Verschlusses (110) an dem unteren Gehäuse (21) des Endgeräts (2) eines optischen Netzwerks fixiert ist; oder
die Fixiervorrichtung eine Schraube (111) ist, wobei die Basis (4) des Zugriffsanschlusskastens mit einem Basisverbindungsloch versehen ist, wobei das untere Gehäuse (21) des Endgeräts (2) eines optischen Netzwerks mit einem Verbindungsloch für das untere Gehäuse versehen ist, das an dem Basisverbindungsloch ausgerichtet ist, und wobei das ausgerichtete Basisverbindungsloch und das Verbindungsloch für das untere Gehäuse mit einer Schraube (111) versehen sind und wobei die Basis (4) des Zugriffsanschlusskastens unter Verwendung der Schraube (111) an dem unteren Gehäuse des Endgeräts (2) eines optischen Netzwerks fixiert ist.

3. Zugriffsanschlusskasten nach Anspruch 1 oder 2, wobei die Wickelvorrichtung (61) für den Eingangsleiter (51) mit Eingangsleitern (51) ausgestattet ist und wobei die Wickelvorrichtung (62) für den Ausgangsleiter (52) mit Ausgangsleitern (52) ausgestattet ist.

4. Zugriffsanschlusskasten nach Anspruch 3, wobei die Wickelvorrichtung (61) für den Eingangsleiter (51) und die Wickelvorrichtung (62) für den Ausgangsleiter (52) aus zwei getrennten kreisförmigen Hohlzylindern dargestellt sind, wobei die Außenkante jedes Hohlzylinders mit einer Vielzahl von gleichmäßig verteilten kabelsteuernden Klinken (7) versehen ist.

5. Zugriffsanschlusskasten nach Anspruch 1 oder 2, wobei an einer Kante einer Seite der Bodenfläche eine Leiter-Schmelzspleißregion vorgesehen ist und wobei an einer Kante der gegenüberliegenden Seite eine Verschlussrille vorgesehen ist.

6. Zugriffsanschlusskasten nach einem der Ansprüche 1 bis 4, wobei ein Ende des Eingangsleiters (51) nach dem Aufwickeln auf die Wickelvorrichtung (61) für den Eingangsleiter (51) zum Schmelzspleißen mit einem Ende des Ausgangsleiters (52) der Wickelvorrichtung (62) für den Ausgangsleiter (52) in die Leiter-Schmelzspleißregion (8) geführt wird und der Ausgangsleiter (52) nach dem Schmelzspleißen nach dem Aufwickeln auf die Wickelvorrichtung (62) für den Eingangsleiter (52) mit dem anderen Ende des Ausgangsleiters (52), das mit einem Stecker (31) versehen ist, mit dem Endgerät (2) des optischen Netzwerks verbunden ist.

7. Zugriffsanschlusskasten nach Anspruch 1, wobei ein Ende des Eingangsleiters (51) nach dem Aufwickeln auf die Wickelvorrichtung (61) für den Eingangsleiter (51) und nach dem Aufwickeln auf die Wickelvorrichtung (62) für den Ausgangsleiter (52) den Ausgangsleiter (52) ausgibt und unter Verwendung des vormontierten Steckers des Ausgangsleiters (52) mit dem Endgerät (2) des optischen Netzwerks verbunden ist.

8. Zugriffsanschlusskasten nach Anspruch 5 oder 6, wobei sowohl ein Kabeleinlass als auch ein Kabelauslass (10) an einer oberen Seitenwand und an eine untere Seitenwand der Basis (4) vorgesehen sind.

9. Zugriffsanschlusskasten nach Anspruch 7, wobei eine Kabelrille (9) in einer Position an der Bodenfläche gegenüber jedem Kabeleinlass und -auslass (10) vorgesehen ist.

10. Zugriffsanschlusskasten nach Anspruch 5, wobei ein Anschlusskabelauslass (17) in einer Position an der unteren Seitenwand der Basis gegenüber der Verschlussrille (15) vorgesehen ist.

## Revendications

1. Boîtier de terminal d'accès, comprenant une base (4), la base (4) comprenant une surface inférieure et des parois latérales définies autour de la surface inférieure, la surface inférieure et les parois latérales constituant une structure de type boîtier d'ouverture ; la base étant adaptée et connectée à un couvercle de protection, le couvercle de protection étant un boîtier inférieur (21) d'un terminal de réseau optique (2) ; la base du boîtier de terminal d'accès étant fixée au boîtier inférieur (21) du terminal de réseau optique (2) à l'aide d'un dispositif de fixation
**caractérisé en ce que**
la surface inférieure du boîtier de terminal d'accès est définie avec un appareil d'enroulement (61) pour une fibre d'entrée (51) et un appareil d'enroulement (61) pour une fibre de sortie (52), et un connecteur pré-connecté (31) au niveau de l'extrémité de la fibre de sortie (52) est connecté sur une sortie de queue de cochon (17) définie au niveau d'une position sur la paroi latérale inférieure de la base (4) sous la forme d'une queue de cochon (3) sortant de la sortie de queue de cochon (17) vers le terminal de réseau optique (2).

2. Boîtier de terminal d'accès selon la revendication 1, dans lequel le dispositif de fixation est une boucle (110), une rainure de boucle (15) s'adaptant à la boucle (110) est définie sur le boîtier inférieur (21) du terminal de réseau optique (2), et la base (4) du boîtier de terminal d'accès est fixée au boîtier inférieur (21) du terminal de réseau optique (2) à l'aide de la boucle (110) ; ou
le dispositif de fixation est un boulon (111), la base (4) du boîtier de terminal d'accès est définie avec un trou de connexion de base, le boîtier inférieur (21) du terminal de réseau optique (2) est défini avec un trou de connexion de boîtier inférieur aligné avec le trou de connexion de base, et le trou de connexion de base aligné et le trou de connexion de boîtier inférieur sont définis avec un boulon (111), et la base (4) du boîtier de terminal d'accès est fixée au boîtier inférieur du terminal de réseau optique (2) à l'aide du boulon (111).

3. Boîtier de terminal d'accès selon la revendication 1 ou 2, l'appareil d'enroulement (61) pour la fibre d'entrée (51) est équipé de fibres d'entrée (51), et l'appareil d'enroulement (62) pour la fibre de sortie (52) est équipé de fibres de sortie (52).

4. Boîtier de terminal d'accès selon la revendication 3, dans lequel l'appareil d'enroulement (61) pour la fibre d'entrée (51) et l'appareil d'enroulement (62) pour la fibre de sortie (52) sont constitués de deux cylindres creux circulaires séparés, les bords extérieurs de chaque cylindre creux étant définis avec une pluralité de cliquets de commande de câble répartis de manière régulière (7).

5. Boîtier de terminal d'accès selon la revendication 1 ou 2, dans lequel une région d'épissage par fusion de fibres est définie au niveau d'un bord d'un côté de la surface inférieure, et une rainure de boucle est définie au niveau d'un bord du côté opposé.

6. Boîtier de terminal d'accès selon l'une des revendications 1 à 4, dans lequel une extrémité de la fibre d'entrée (51), après avoir été enroulée sur l'appareil d'enroulement (61) pour la fibre d'entrée (51), entre dans la région d'épissage par fusion de fibres (8) pour l'épissage par fusion avec une extrémité de la fibre de sortie (52) de l'appareil d'enroulement (62) pour la fibre de sortie (52), et la fibre de sortie (52) après l'épissage par fusion, après avoir été enroulée sur l'appareil d'enroulement (62) pour la fibre de sortie (52), se connecte avec l'autre extrémité de la fibre de sortie (52), définie avec un connecteur (31), avec le terminal de réseau optique (2).

7. Boîtier de terminal d'accès selon la revendication 1, dans lequel une extrémité de la fibre d'entrée (51), après avoir été enroulée sur l'appareil d'enroulement (61) pour la fibre d'entrée (51) et enroulée sur l'appareil d'enroulement (62) pour la fibre de sortie (52), délivre en sortie la fibre de sortie (52), et est connectée au terminal de réseau optique (2) en utilisant le connecteur de pré-connexion de la fibre de sortie (52).

8. Boîtier de terminal d'accès selon la revendication 5 ou 6, dans lequel une entrée de câble et une sortie de câble (10) sont définies à la fois sur une paroi latérale supérieure et sur une paroi latérale inférieure de la base (4).

9. Boîtier de terminal d'accès selon la revendication 7, dans lequel une rainure de câble (9) est définie au niveau d'une position sur la surface inférieure opposée à chaque entrée et sortie de câble (10).

10. Boîtier de terminal d'accès selon la revendication 5, dans lequel une sortie de queue de cochon (17) est définie au niveau d'une position sur la paroi latérale inférieure de la base opposée à la rainure de boucle (15).
